# EUROPÄISCHE PATENTSCHRIFT

(11) **EP 1 511 989 B1**
(45) Veröffentlichungstag und Bekanntmachung des Hinweises auf die Patenterteilung: **23.01.2019**
(21) Anmeldenummer: 03737961.7
(22) Anmeldetag: 12.05.2003
(51) Int. Cl.: G01N 21/64, G01N 21/31, G01N 21/25

(54) **FLUORESZENZMESSSYSTEM**
FLUORESCENCE MEASURING SYSTEM
SYSTEME DE MESURE FONDEE SUR LA FLUORESCENCE

(30) Priorität: 24.05.2002 DE 10223438
(43) Veröffentlichungstag der Anmeldung: 09.03.2005
(73) Patentinhaber: Bayer Intellectual Property GmbH, 40789 Monheim (DE)
(72) Erfinder: BECHEM, Martin, 42111 Wuppertal (DE); PAFFHAUSEN, Wolfgang, 51381 Leverkusen (DE)
(74) Vertreter: BIP Patents
(86) Internationale Anmeldenummer: PCT/EP2003/004916
(87) Internationale Veröffentlichungsnummer: WO 2003/100398

(56) Entgegenhaltungen:
- EP-A- 0 751 393
- WO-A-98/42442
- DE-C- 19 914 279
- FR-A- 2 808 888
- US-A- 5 355 215
- US-A- 5 854 684
- US-A- 6 057 163
- US-B1- 6 362 006

## Beschreibung

Die Erfindung betrifft ein. Fluoreszenz-Mess-System wie es zum Beispiel beim Hochdurchsatz-Screening in der Wirkstoff-Entwicklung eingesetzt werden kann.

Eine gängige Methode, einen Stoff berührungslos nachzuweisen oder zu analysieren, besteht darin, den Stoff mit einem ausgewählten Fluoreszenz-Farbstoff zu markieren. Die Auswahl des Fluoreszenz-Farbstoffes hängt im Allgemeinen von der zu untersuchenden Stoffeigenschaft ab. Für derartige Analysen wird der markierte Stoff mit Licht einer Wellenlänge oder eines Wellenlängenbereichs, das auf das Absorptionsverhalten des eingesetzten Fluoreszenz-Farbstoffs abgestimmt ist (im Allgemeinen das Maximum der Absorption) beleuchtet. Die Antwort des Fluoreszenz-Farbstoffs besteht aus der Emission des für den Fluoreszenz-Farbstoff charakteristischen Emissionslichtes, dessen Wellenlänge im Allgemeinen langwelliger ist, als die der anregenden Strahlung. Bei geeigneter Wahl des markierenden Fluoreszenz-Farbstoffs lassen sich Änderungen in der Stoffeigenschaft, z.B. die Konzentration des Stoffs in einer Lösung, durch Änderungen im Fluoreszenzverhalten z.B. durch Änderungen der Fluoreszenzintensität und/oder der Schwerpunktwellenlänge der Emission quantitativ messen.

Eine Unterklasse von Stoffen stellen z.B. Biomoleküle (DNA, Proteine, Lipide) und Zellfragmente, biologische Zellen oder Gewebe bzw. organische oder anorganische Träger ('beats' bzw. 'microspheres') dar, auf welche Biomoleküle immobilisiert wurden. Es ist Stand der Technik, dass dieses biologische Material mit geeigneten Techniken fluoreszent markiert werden kann.

Eine gängige Technik in der Wirkstoff-Forschung ist es, Fluoreszenzverfahren für die Bewertung von Testsubstanzen einzusetzen, indem das zu untersuchende Testsystem (Biomoleküle und/oder Zellen und/oder mit Biomolekülen/Zellen immobilisierte Träger) mit einem geeigneten Fluoreszenz-Farbstoff angefärbt wird, so dass sich durch die Interaktion von Testsubstanzen die Änderungen von Parametern hierüber quantitativ abgreifen lassen. Typische Beispiele hierfür ist die Anfärbung mit ionen-sensitiven Fluoreszenz-Farbstoffen, wie sie z.B. für den Nachweis von K+, Ca++ und deren Änderungen, oder auch für den Nachweis von Änderungen im Membranpotential oder des intrazellulären pH-Wertes kommerziell verfügbar sind.

Häufig werden für derartige Tests entsprechend präparierte und fluoreszenzmarkierte Zellen in kleinen Reaktionsgefäßen eingesetzt. Diese stehen typischerweise auf einer Fläche von ca. 108 mm x 72 mm in einer Matrixanordnung als sogenannte standardisierte Mikrotiterplatten mit einer Grundfläche von ca. 128 mm x 86 mm in 96-, 384- oder 1536-Testlochversion zur Verfügung. Oft wachsen biologische Zellen in einer Nährlösung auf dem Boden der Testlöcher und bilden einen sogenannten Zelllayer, der nach einer entsprechenden Anfärbung auf verschiedenste Weise zur Fluoreszenz angeregt werden kann. Eine automatisierte Standardmethode besteht in der Auswertung einer Mikrotiterplatte mit Hilfe kommerzieller Mikrotiterplatten-Readern mit fester Fluoreszenz-Farbstoff-Anregungs- und Emissions-Messgeometrie. Zur großflächigen und vollständigen Auswertung wird die Mikrotiterplatte sequentiell Testloch für Testloch elektromechanisch in die Anregungs-/Messposition transportiert. Es gibt Mess-Systeme mit unterschiedlichen Beleuchtungsgeometrien für die senkrechte Anregung und Messung der Fluoreszenz von oben oder durch den transparenten Boden von Mikrotiterplatten von unten wie es z.B. in DE 197 20 667 A1 (oder parallel in US 5,933,232) beschrieben wird.

Da im Hochdurchsatz-Screening der Wirkstoff-Forschung einige Millionen chemische Substanzen in möglichst kurzer Zeit auf ihre Wirkung hin untersucht werden sollen, ist eine Voraussetzung für diesen hohen Durchsatz eine hohe Messgeschwindigkeit. Hier steht bei den herkömmlichen Fluoreszenz-Readern das mechanische Bewegen der Platte im Wege. Für eine Mikrotiterplatte mit 1536 Testlöchern, die einzeln angefahren werden müssen, liegen die Messzeiten im Minutenbereich. Deutlich schneller arbeiten die technisch aufwendigeren Laser-Scanning-Systeme (K. Schroeder e.a. : FLIPR: A New Instrument for Accurate, High Throughput Optical Screening; J. of. Biomolecular Screening, Voll, Number 2, 1996; US 5,355,215), bei dem die Zellen in allen Testlöchern einer Mikrotiterplatte durch einen Laserstrahl zwar sequentiell, aber durch eine sehr schnelle Strahlführungnährungsweise gleichzeitig zur Fluoreszenz angeregt werden. Durch das Scannen mit Hilfe von rotierenden Umlenkspiegeln ergibt sich eine quasi flächenhafte Anregung der Objekte, deren Fluoreszenz mit einem integrierenden Bildsensor erfasst wird. Über ein Blendensystem wird eine mögliche Hintergrundfluoreszenz minimiert. Trotz bzw. wegen der geringen Verweilzeit des Lasers ist die lokale Bestrahlungsstärke jedoch sehr hoch, so dass die Gefahr des Ausbleichens der im Allgemeinen nicht sehr lichtbeständigen Fluoreszenz-Farbstoffe und damit eine Fehlinterpretation der Messwerte besteht. Außerdem ist das System durch die Anzahl der Anregungswellenlängen des Lasers eingeschränkt. So ist eine Anregung im nahen UV bei z.B. bei 360 nm mit den gängigen Argon-Ionen-Laser mit seinem Anregungs-Maximum bei 488 nm kaum möglich. Ein Wechsel des Lasers ist umständlich; eine häufig notwendige (Wasser)-Kühlung kostenaufwendig. Die Justierung der Optik ist für ein Routineanwendung diffizil und nur von Fachpersonal durchführbar; die Mechanik (rotierende Umlenkspiegel) ist potentiell störanfällig.

Die einzelnen Testlöchern einer Mikrotiterplatte enthalten in sehr vielen Fällen im Überstand der Zellen noch den Fluoreszenz-Farbstoff, mit dem sie gefärbt worden sind. Zum Teil ist dies zwingend notwendig (z.B. bei Verteilungsfarbstoffen zur Messung des Membranpotentials); aber auch ein Waschvorgang, bei dem ein Auswaschen des Restfarbstoffs durch Verdünnen erfolgt, ist problematisch. Bei einem Waschvorgang kann nicht sichergestellt werden, dass der Zelllayer nicht beschädigt wird oder die Zellen allein durch die Strömungsdynamik beim Absaugen ihre biologische Funktionalität nicht ändern und damit die Messergebnisse nicht verfälscht werden. Ein zusätzlicher Waschschritt senkt außerdem den Probendurchsatz deutlich herab.

Bei den herkömmlichen Fluoreszenz-Mess-Systemen erweist sich ihre Beleuchtungsgeometrie, bei der die Probe senkrecht von unten bzw. von oben angeregt wird, als sehr nachteilig. Befindet sich in dem Zellüberstand wie oben beschrieben noch Fluoreszenz-Farbstoff, dann kann mit den erwähnten Anregungsverfahren das Hintergrundsignal infolge der angeregten Flüssigkeits-Säule im Überstand ein Vielfaches der zellulären Fluoreszenz-Änderung ausmachen, die aus der Wechselwirkung einer Testsubstanz mit den Zellen resultiert. Der Grund hierfür ist, dass der fluoreszenzmarkierte Zellmonolayer im allgemeinen nur eine Dicke von 10 µm hat, die Höhe des Überstands aber etliche Millimeter beträgt. Eine Verfälschung der Messergebnisse wird hierdurch unvermeidlich.

US 5,854,684 offenbart die Beleuchtung eines planaren Substrats durch zwei symmetrisch angeordnete Lichtquellen unter einem Winkel < 90° von oben und Detektion des an dem planaren Substrat reflektierten Lichts durch eine senkrecht über dem planaren Substrat befindliche Kamera. Diese Messanordnung ist für Mikrotiterplatten nicht geeignet, da es wegen der Tiefe der Testlöcher der Mikrotiterplatte bei dieser Anordnung zu Abschattungseffekten kommen kann.

EP 0 751393 A offenbart die Beleuchtung einer Mikrotiterplatte durch den transparenten Boden. Die Beleuchtung erfolgt durch zwei Arrays von Lichtquellen, die jeweils mit Streufiltern versehen sind, um eine homogene Beleuchtung des Bodens der Mikrotiterplatte zu erreichen. Zusätzlich ist der Container, in dem sich die Lichtquellen und das Detektorsystem befinden, mit stark streuenden Oberflächen versehen. Diese Beleuchtungsanordnung bewirkt, dass wesentliche Anteile des Anregungslichtes unter einem Öffnungswinkel, der größer ist als 30°, die Testlöcher erreichen, und somit eine Vefälschung der Messergebnisse durch Anregung des Überstandes in den Testlöchern erfolgt.

DE 199 14 279 C offenbart eine Anordnung zum optischen Auslesen der Information von einem matrixförmigen Substrat mit einer Vielzahl von Einzelproben. Bei dem matrixförmigen Substrat handelt es sich jedoch nicht um Mikrotiterplatten. Eine Beleuchtung und Detektion durch den Boden des Probenträgers ist ebenfalls nicht offenbart und auch keine linearen Beleuchtungsquellen, die an einander gegenüberliegenden Seiten einer Mikrotiterplatte angeordnet sind.

US 6,362,006 B1 offenbart die Beleuchtung einer Mikrotiterplatte durch zwei symmetrisch angeordnete Strahlungsquellen, die unter einem Winkel <90° zur Mikrotiterplatte angeordnet sind, und die Detektion des an der Mikrotiterplatte reflektierten Lichts in einem Detektor der senkrecht über der Mikrotiterplatte angeordnet ist. Diese Anordnung hat den Nachteil, dass es wegen der Tiefe der Testlöcher in der Mikrotiterplatte zu Abschattungseffekten und damit zu einer ungleichmäßigen Beleuchtung der am Boden der Testlöcher befindlichen Proben kommen kann.

Für die quantitative Fluoreszenz-Analyse ergab sich somit die Notwendigkeit eines neuartigen homogenen Flächenanregungsverfahren, das die folgenden Anforderungen erfüllt:
- Anregung eines Fluoreszenz-Farbstoffs mindestens im Bereich UV-VIS (220 nm-800 nm) an frei wählbaren Schwerpunkts-Wellenlängen;
- Minimierung von störenden Hintergrundsignalen durch besondere Beleuchtungsgeometrie;
- Steigerung der Messgeschwindigkeit durch parallele, d.h. gleichzeitige Anregung aller über die Messfläche verteilter Proben und Parallelverarbeitung mit bildgebenden Detektionsverfahren (im Vergleich zur sequentiellen Messung);
- Vermeidung von Ausbleicheffekten durch minimale örtlichen Strahlungsleistung;
- Ausschluss von mechanisch bewegten Komponenten;
- Vermeidung von aufwändigen optischen Nachjustierungen nach Einrichtung des Systems;
- Nachweisempfindlichkeit vergleichbar mit den herkömmlichen Fluoreszenz-Mess-Systemen.

Die Lösung der erfindungsgemäßen Aufgabe besteht in einem Fluoreszenz-Mess-System mit den Merkmalen des Anspruchs 1.

Das Detektorsystem ist bei im wesentlichen horizontaler Lage der Mikrotiterplatte unterhalb der Mikrotiterplatte angeordnet.

Die Mikrotiterplatte hat typischerweise Formate mit 96, 384 oder 1536 Testlöchern. Die Mikrotiterplatte ist transparent.

Die Ausleuchtung des transparenten Bodens der Mikrotiterplatte erfolgt bevorzugt mit einer Homogenität von ± 20%, bevorzugt ± 10%. Eine solche Homogenität kann erzielt werden indem jeweils eine der linearen Beleuchtungsquellen an jeder von zwei einander gegenüberliegenden Seiten der Mikrotiterplatte angeordnet sind. Jede der linearen Beleuchtungsquelle beleuchtet den ihr näher liegenden Bereich des Bodens der Mikrotiterplatte mit größerer Intensität als den weiter entfernt liegenden Bereich, da die Intensität I des Anregungslichts mit I ∼ 1/R² mit zunehmendem Abstand R von der Beleuchtungsquelle abnimmt. Durch die erfindungsgemäße geometrische, das heißt symmetrische, Anordnung der Beleuchtungsquellen ist die Beleuchtungsintensität über den gesamten Boden der Mikrotiterplatte im wesentlichen konstant. Bevorzugt werden die beiden linearen Beleuchtungsquellen an jeder der beiden Längsseiten einer rechteckigen Mikrotiterplatte angeordnet. Es können aber auch zum Beispiel vier Beleuchtungsquellen vorhanden sind, die jeweils paarweise symmetrisch an vier verschiedenen Seiten der Mikrotiterplatte angeordnet sind, so dass sich die Beleuchtungsintensitäten der vier Beleuchtungsquellen überlagern und die Beleuchtungsintensität über den gesamten Boden der Mikrotiterplatte im wesentlichen konstant ist.

Die linearen Beleuchtungsquellen können als lineare Halogenbrennstäbe, als Leuchtstoffröhren oder als LED-Zeilen ausgebildet sein. Bevorzugt sind die linearen Beleuchtungsquellen jedoch linear angeordnete lichtleitende Fasern, die sich in einer speziellen Anordnung aus einem runden Faserbündel zu einem sogenannte Faser-Querschnittswandler arrangieren lassen. Lichtleitende Fasern können aus speziellem Polymer-Material wie PMMA (PolyMethylMeth Acrylat) oder PC (Polycarbonat) oder aus Standard-Glas oder aus Quarzglas bestehen und sind im Durchmesser-Bereich von ca. 5 µm bis 2 mm geeignet. Um Inhomogenitäten der Lichteinstrahlung auf der Eingangsseite des Lichtleiters auszugleichen, sollten die Fasern des Querschnittswandlers statistisch gemischt sein.

Die linearen Beleuchtungsquellen emittieren eine Wellenlänge, die der Anregungslängenwelle für eine Fluoreszenzanregung der Proben in den Testlöchern der Mikrotiterplatte entspricht. Die Beleuchtungsquellen können farbiges Licht oder entsprechend gefiltertes Weißlicht emittieren z.B. dadurch, dass das Licht entsprechender Lampen eingangsseitig in den Faser-Querschnittswandler eingespeist wird und über Filter, vorzugsweise Interferenz-Filter, monochromatisiert wird. Entsprechend können die Beleuchtungsquellen auch das Licht von Blitzlampen zur gepulsten Anregung oder von UV-Lampen zur Fluoreszenzanregung im UV-Bereich (220-400 nm) emittieren. Ebenso lässt sich ein kontinuierlich strahlender Laser mit entsprechender Aufweitungsoptik angepasst an die numerische Apertur der Faseroptik in den Querschnittwandler einkoppeln. Mit einem gepulsten Laser in gleicher Anordnung ergibt sich die Möglichkeit der bildgebenden zeitverzögerten Fluoreszenz-Messung (TRF). Durch die im allgemeinen kurze Fluoreszenslebensdauer des störenden Hintergrunds kann bei entsprechender Fluoreszenz-Lebenszeit des Nutzsignals das Verhältnis von Signal zum Rauschen drastisch verbessert werden.

Das Detektorsystem kann einen bildgebenden Detektor wie ein Videomeßsystem enthalten, welches vorzugsweise eine Restlichtverstärkereinrichtung aufweist. Die Restlichtverstärkereinrichtung kann eine Gating-Einrichtung aufweisen, die dazu dienen kann, die Kamera erst nach einem kurzen Laser-Anregungspuls (Größenordnung pico-Sekunden) im Bereich von Nano-Sekunden für das Nutzsignal empfindlich zu machen.

Zwischen der Mikrotiterplatte und dem Detektorsystem können ein oder mehrere Filter angeordnet sein, die das Fluoreszenzlicht vor der Detektion selektieren. Mehrere Filter, die alternativ eingesetzt werden sollen, können in einer Filterwechseleinrichtung angeordnet sein.

Das Fluoreszenz-Mess-System kann auch einen oder mehrere dichroitische Spiegel zwischen der Mikrotiterplatte und dem Detektorsystem aufweisen, durch die das Fluoreszenzlicht aus der Mikrotiterplatte in zwei oder mehrere Wellenlängen aufgespalten und selektiv ausgekoppelt und detektiert wird.

Vorteil des erfindungsgemäßen Fluoreszenz-Mess-System ist, dass eine Mikrotiterplatte insgesamt gleichzeitig ausgeleuchtet wird und nicht nur der Kernbereich eines jeden Testlochs.

Das erfindungsgemäße Fluoreszenz-Mess-System ist durch eine geeignete Auswahl von Anregungslichtquellen und Filtern durchstimmbar vom UV bis in den nahen Infrarotbereicht (220-800 nm).

Das erfindungsgemäßen Fluoreszenz-Mess-System eignet sich wegen der gleichzeitigen und parallelen Messung aller Testlöcher einer Mikrotiterplatte insbesondere für kinetische Messungen, die mit dem erfindungsgemäßen Fluoreszenz-Mess-System an allen Testlöchern gleichzeitig durchgeführt werden können und damit eine große Zeitersparnis gegenüber kinetischen Messungen mit konventionellen Systemen bedeuten.

### Figuren und Beispiele

Die Figuren zeigen
- Fig. 1: Prinzip der homogenen Anregung
- Fig. 2: Querschnitt eines Glasfaser-Querschnittswandlers
- Fig. 3: Aufbau eines Fluoreszenz-Mess-System
- Fig. 4: Beleuchtungssystem mit zwei Querschnittswandlern
- Fig. 5: Messergebnisse an einer 1536-Testloch-Mikrotiterplatte
- Fig. 6: Ortsaufgelöste Messung der Fluoreszenzemission aus den Testlöchern einer 384-Testloch-Mikrotiterplatte mit dem erfindungsgemäßen Fluoreszenz-Mess-System

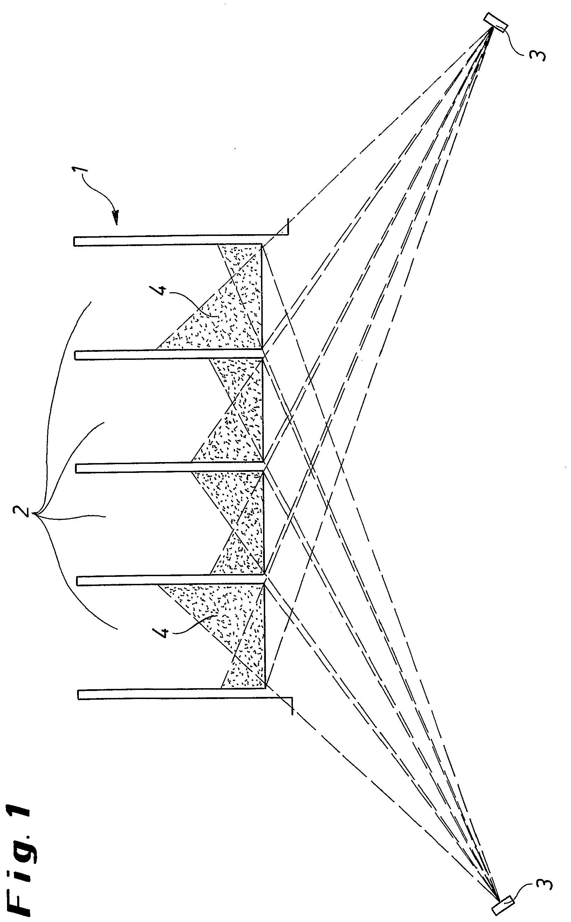

Fig. 1 zeigt wie durch zwei Beleuchtungsquellen 3 eine homogene Ausleuchtung einer Mikrotiterplatte 1 erreicht wird. Die Mikrotiterplatte 1 mit den Testlöchern 2 wird von unten durch die beiden symmetrisch angeordneten Beleuchtungsquellen 3 beleuchtet. Das durch die Beleuchtungsquellen 3 beleuchtete Volumen 4 in den Testlöchern 2 ist dunkel gefärbt und für alle Testlöcher 2 im wesentlichen konstant.

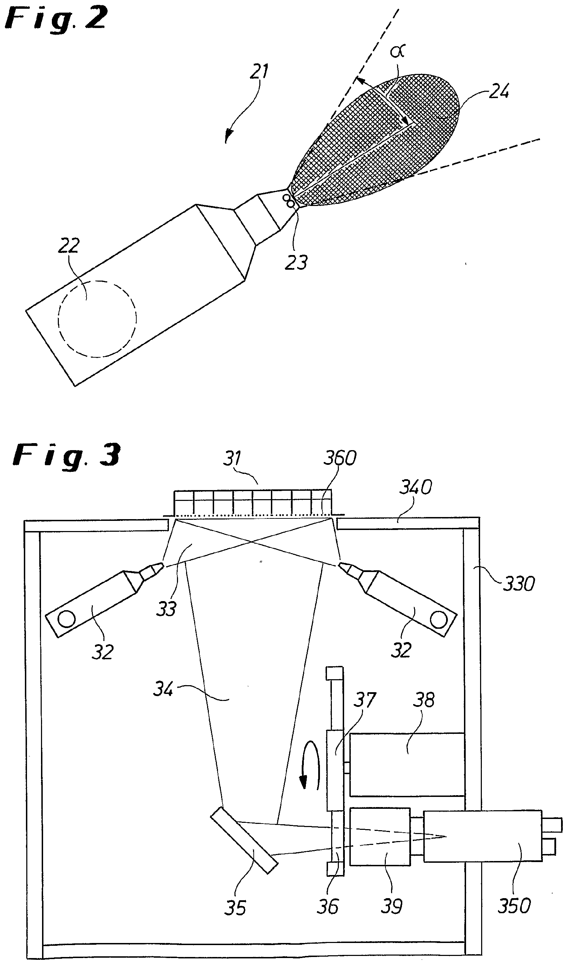

Fig. 2 zeigt einen Querschnitt eines Faser-Querschnittswandlers 21. Das Anregungslicht wird durch das Lichtleitbündel 22 zugeführt. Im Querschnittswandler 21 werden die Lichtleiterfasern des Bündels 22 in eine sich linear erstreckende Zeile von Fasern 23 umgeordnet. Die Breite der Zeile ergibt sich aus dem Durchmesser des Eingangsbündels und beträgt bei einer Länge von 150 mm und einem Eingansquerschnitt von 15 mm ca. 1 mm. Das abgestrahlte Licht 24 weist typischerweise, z.B. bei einem Glasfaser-Querschnittswandler einen Öffnungswinkel α von etwa 30° auf, was einer Apertur von 0,5 = sin α/2 entspricht.

Fig. 3 zeigt den Aufbau eines Fluoreszenz-Mess-Systems. Das Fluoreszenz-Mess-System besteht aus einem Gehäuse 330 mit einem Deckel 340. In dem Deckel 340 gibt es eine Aussparung, auf der eine Mikrotiterplatte 31 so positioniert ist, dass sie aus dem Inneren des Gehäuses 330 angestrahlt werden kann. Im Inneren des Gehäuses 330 befinden sich die weiteren Bauteile des Fluoreszenz-Mess-Systems. Die Mikrotiterplatte 31 mit der Grundfläche von ca. 128 mm x 86 mm und transparenter Bodenplatte 360 wird durch die Bodenplatte 360 von zwei Glasfaser-Querschnittswandlern 32 unter einem Winkel von etwa 25° mit dem Anregungslicht 33 angestrahlt. Die beiden Glasfaser-Querschnittswandler 32 sind entlang der 128 mm-Längsseiten der Mikrotiterplatte 31 angeordnet. Das durch die Bodenplatte 360 der Mikrotiterplatte 31 emittierte Fluoreszenzlicht 34 wird über den dichroitischen Spiegel 35 über eine Linse 39 auf eine integrierende CCD-Kamera 350 gelenkt. Zwischen dem dichroitischen Spiegel 35 und der Linse 39 befindet sich ein Interferenzfilter 36, der in einem Filterrad 37 angeordnet ist. Das Filterrad 37 kann mit Hilfe eines Motors 38 rotiert werden.

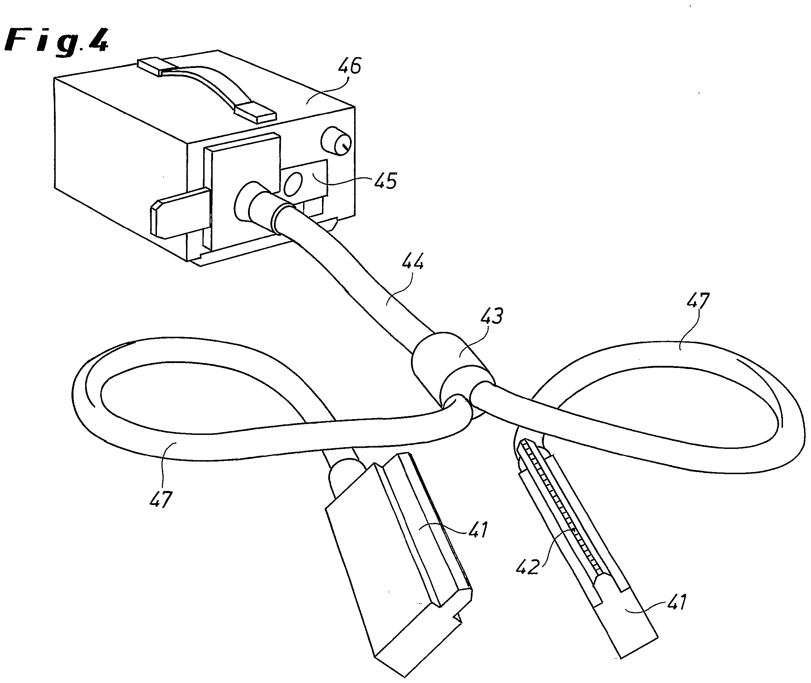

Fig. 4 zeigt ein Beleuchtungssystem mit zwei Faser-Querschnittswandlern 41. Das Eingangslicht für die Fasern wird mit einer Lampeneinheit 46 erzeugt. Über einen Filterschieber 45 kann Licht unterschiedlicher Wellenlänge aus dem Anregungsspektrum der Lampeneinheit 46 herausgefiltert werden. Auf der Faser-Mischstrecke 44 werden die Lichtleitfasern statistisch gemischt und an dem Verteilerstück 43 in zwei Stränge 47 aufgeteilt. Am Ende der Stränge 47 befinden sich die Faser-Querschnittswandler 41 mit den linear angeordneten Faser-Austrittsflächen 42.

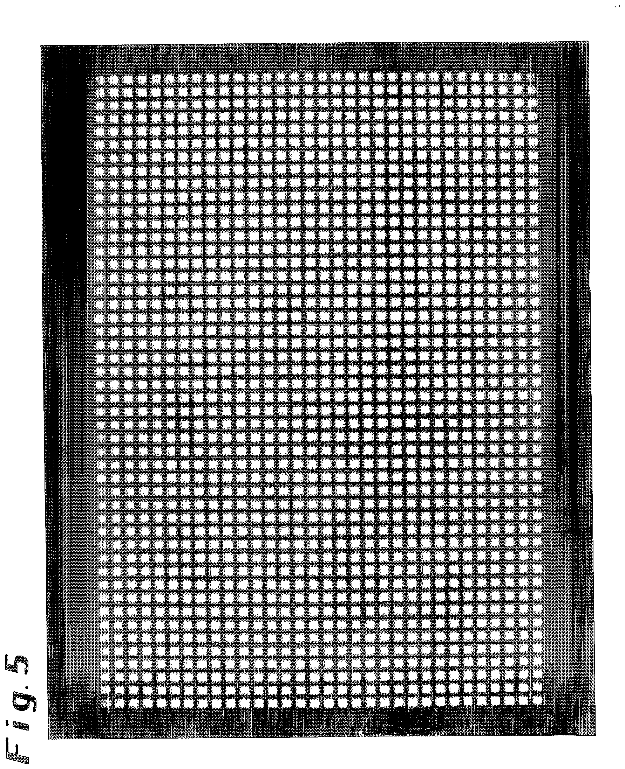

Fig. 5 zeigt ein Beispiel für die Messung der Fluoreszenzemission aus den Testlöchern einer 1536-Testloch-Mikrotiterplatte mit dem erfindungsgemäßen Fluoreszenz-Mess-System. In allen Testlöchern befindet sich die gleiche Fluoreszenzlösung. Durch die homogene Ausleuchtung ergibt sich ein Abbild der Mikrotiterplatte, auf dem die Emission aller Testlöcher innerhalb der vorgegebenen Toleranzen gleichmäßig hell ist.

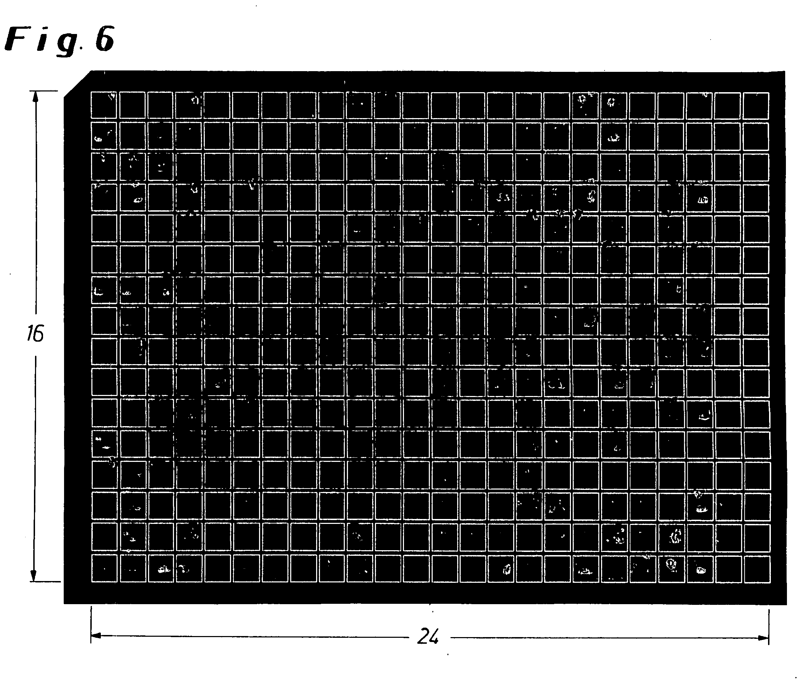

Fig. 6 zeigt ein Beispiel für eine ortsaufgelöste Messung der Fluoreszenzemission aus den Testlöchern einer 384-Testloch-Mikrotiterplatte (24 x 16 Löcher) mit dem erfindungsgemäßen Fluoreszenz-Mess-System. In jedem Testloch befinden sich verschiedene Zellklone, die ein Fluoreszenz-Protein, das sogenannte GFP (green fluorescent protein) unterschiedlich gut expremieren. Gesucht wird der Klon mit der besten Expression. Es ist offensichtlich, dass der Mittelwert über ein Testloch (Prinzip: Fluoreszenz-Reader) falsche Daten/Aussagen liefert, da nur über die örtliche Auflösung innerhalb eines Testlochs diejenigen Zellen, die besonders hell fluoreszieren, also eine gute Expression zeigen, identifiziert

## Patentansprüche

1. Fluoreszenz-Mess-System aufweisend
eine Mikrotiterplatte (1, 31) und
Beleuchtungsquellen zur Anregung der Fluoreszenz von Proben in den Testlöchern (2) durch den transparenten Boden der Mikrotiterplatte (1, 31) und
ein Detektorsystem (350) für das Fluoreszenzlicht aus den Testlöchern (2) der Mikrotiterplatte (1, 31), das unterhalb der Mikrotiterplatte (1, 31) so angeordnet ist, dass es eine Fluoreszenzemission aus den Testlöchern (2) der Mikrotiterplatte (1, 31) unter einem Winkel außerhalb des Reflexionsbereichs des Anregungslichtes der Beleuchtungsquellen detektiert,
**dadurch gekennzeichnet, dass**
die Beleuchtungsquellen lineare Beleuchtungsquellen (3, 21, 32, 41) sind und jeweils an einander gegenüberliegenden Seiten der Mikrotiterplatte (1, 31) angeordnet sind und dass der transparente Boden (360) der Mikrotiterplatte (1, 31) direkt oder über Umlenkspiegel unter einem Öffnungswinkel von ≤ 30° homogen ausgeleuchtet wird.

2. Fluoreszenz-Mess-System nach Anspruch 1, **dadurch gekennzeichnet, dass** die Fluoreszenzemission aus den Testlöchern (2) der Mikrotiterplatte (1, 31) unter einem Winkel im Bereich von 80° bis 100°, besonders bevorzugt im Bereich von 90°, zur Ausdehnungsebene der Mikrotiterplatte (1, 31) detektiert wird.

3. Fluoreszenz-Mess-System nach Anspruch 1 oder 2, **dadurch gekennzeichnet, dass** die Mikrotiterplatte (1, 31) 96, 384 oder 1536 Testlöcher (2) aufweist.

4. Fluoreszenz-Mess-System nach einem der Ansprüche 1 bis 3, **dadurch gekennzeichnet, dass** zwei lineare Beleuchtungsquellen (3, 21, 32, 41) vorhanden sind und jeweils eine lineare Beleuchtungsquelle (3, 21, 32, 41) an jeder der beiden Längsseiten einer rechteckigen Probenaufnahmevorrichtung (1, 31) angeordnet ist.

5. Fluoreszenz-Mess-System nach einem der Ansprüche 1 bis 4, **dadurch gekennzeichnet, dass** vier lineare Beleuchtungsquellen (3, 21, 32, 41) vorhanden sind, die jeweils paarweise symmetrisch an vier verschiedenen Seiten der Probenaufnahmevorrichtung (1, 31) angeordnet sind.

6. Fluoreszenz-Mess-System nach einem der Ansprüche 1 bis 5, **dadurch gekennzeichnet, dass** die linearen Beleuchtungsquellen (3, 21, 32, 41) als lineare Halogenbrennstäbe, als Leuchtstoffröhren oder als LED-Zeile ausgebildet sind.

7. Fluoreszenz-Mess-System nach einem der Ansprüche 1 bis 5, **dadurch gekennzeichnet, dass** die linearen Beleuchtungsquellen (3, 21, 32, 41) als linear angeordnete Lichtleitfaser-Leiter ausgebildet sind.

8. Fluoreszenz-Mess-System nach Anspruch 7, **dadurch gekennzeichnet, dass** die Lichtleitfasern (22) der linear angeordneten Lichtleiter statistisch gemischt sind.

9. Fluoreszenz-Mess-System nach einem der Ansprüche 1 bis 8, **dadurch gekennzeichnet, dass** die linearen Beleuchtungsquellen (3, 21, 32, 41) Licht in einer Wellenlänge emittieren, das der Anregungswellenlänge für eine Fluoreszenzanregung der Proben in der Probenaufnahmevorrichtung (1, 31) entspricht.

10. Fluoreszenz-Mess-System nach einem der Ansprüche 1 bis 9, **dadurch gekennzeichnet, dass** die linearen Beleuchtungsquellen (3, 21, 32, 41) farbiges Licht oder entsprechend gefiltertes Weißlicht emittieren.

11. Fluoreszenz-Mess-System nach einem der Ansprüche 1 bis 10, **dadurch gekennzeichnet, dass** die linearen Beleuchtungsquellen (3, 21, 32, 41) das Licht von Blitzlampen zur gepulsten Anregung oder von UV-Lampen zur Fluoreszenzanregung im UV-Bereich emittieren.

12. Fluoreszenz-Mess-System nach einem der Ansprüche 1 bis 11, **dadurch gekennzeichnet, dass** die linearen Beleuchtungsquellen (3, 21, 32, 41) das Licht von einem kontinuierlichen oder gepulsten Laser, das mit entsprechender Einkoppeloptik an die eintrittsseitige numerische Apertur des Lichtleitbündels angepasst wurde, emittieren.

13. Fluoreszenz-Mess-System nach einem der Ansprüche 1 bis 12, **dadurch gekennzeichnet, dass** das Detektorsystem (350) einen bildgebenden Detektor enthält.

14. Fluoreszenz-Mess-System nach Anspruch 13, **dadurch gekennzeichnet, dass** der bildgebende Detektor ein Videomeßsystem ist, vorzugsweise mit einer Restlichtverstärkereinrichtung.

15. Fluoreszenz-Mess-System nach Anspruch 14, **dadurch gekennzeichnet, dass** die Restlichtverstärkereinrichtung eine Gating-Einrichtung aufweist.

16. Fluoreszenz-Mess-System nach einem der Ansprüche 1 bis 15, **dadurch gekennzeichnet, dass** es einen oder mehrere Filter (36) zwischen der Probenaufnahmevorrichtung (1, 31) und dem Detektorsystem (350) aufweist, die das Fluoreszenzlicht vor der Detektion selektieren können.

17. Fluoreszenz-Mess-System nach Anspruch 16, **dadurch gekennzeichnet, dass** mehrere Filter (36) in einer Filterwechseleinrichtung (37) angeordnet sind.

18. Fluoreszenz-Mess-System nach einem der Ansprüche 1 bis 17, **dadurch gekennzeichnet, dass** es einen oder mehrere dichroitische Spiegel (35) zwischen der Mikrotiterplatte (1, 31) und dem Detektorsystem (350) aufweist, durch die das Fluoreszenzlicht aus der Probenaufnahmevorrichtung (1, 31) in zwei oder mehrere Wellenlängen aufgespalten und selektiv ausgekoppelt werden kann.

19. Fluoreszenz-Mess-System nach einem der Ansprüche 1 bis 18, **dadurch gekennzeichnet, dass** die Mikrotiterplatte (1, 31) eine im wesentlichen horizontale Lage hat, und das Detektorsystem (350) ober- oder unterhalb der Mikrotiterplatte (1, 31) angeordnet ist.

## Claims

1. Fluorescence-measuring system, having
a microtitre plate (1, 31)
and illumination sources for exciting sample fluorescence in the test wells (2) through the transparent base of microtitre plate (1, 31) and,
a detector system (350) for the fluorescence light from the test wells (2) of the microtitre plate (1, 31), which is arranged beneath the microtitre plate (1, 31) in such a way that it detects fluorescence emission from the, test wells (2) of the microtitre plate (1, 31), at an angle outside the range of reflection of the excitation light of the illumination sources,
**characterized in that**,
the illumination sources are linear illumination sources (3, 21, 32, 41) and are each arranged on opposite sides of the microtitre plate (1, 31) and **in that** the transparent base (360) of the microtitre plate (1, 31) is homogeneously illuminated directly or via deflecting mirrors at an opening angle of ≤ 30°.

2. Fluorescence-measuring system according to Claim 1, **characterized in that** the fluorescence emission from the test wells (2) of the microtitre plate (1, 31) is detected at an angle in the range from 80° to 100°, particularly preferably about 90° to the extended plane of the microtitre plate.

3. Fluorescence-measuring system according to Claim 1 or 2, **characterized in that** the microtitre plate (1, 31) has 96, 384 or 1 536 test wells (2).

4. Fluorescence-measuring system according to any of Claims 1 to 3, **characterized in that** two linear illumination sources (3, 21, 32, 41) are present and in each case a linear illumination source (3, 21, 32, 41) is arranged on each of the two long sides of a rectangular sample-receiving device (1, 31) .

5. Fluorescence-measuring system according to any of Claims 1 to 4, **characterized in that** four linear illumination sources (3, 21, 32, 41) are present which are arranged in each case in pairs symmetrically on four different sides of the sample-receiving device (1, 31).

6. Fluorescence-measuring system according to any of Claims 1 to 5, **characterized in that** the linear illumination sources (3, 21, 32, 41) are designed as linear halogen rods, as fluorescent tubes or as LED strip.

7. Fluorescence-measuring system according to any of Claims 1 to 5, **characterized in that** the linear illumination sources (3, 21, 32, 41) are designed as linearly arranged optical fibre guides.

8. Fluorescence-measuring system according to Claim 7, **characterized in that** the optical fibres (22) of the linearly arranged light guides are mixed in a random manner.

9. Fluorescence-measuring system according to any of Claims 1 to 8, **characterized in that** the linear illumination sources (3, 21, 32, 41) emit light of a wavelength which corresponds to the excitation wavelength of fluorescence excitation of the samples in the sample-receiving device (1, 31).

10. Fluorescence-measuring system according to any of Claims 1 to 9, **characterized in that** the illumination sources (3, 21, 32, 41) emit coloured light or appropriately red hot white light.

11. Fluorescence-measuring system according to any of Claims 1 to 10, **characterized in that** the linear illumination sources (3, 21, 32, 41) emit light from flashlights for pulsed excitation or from UV lights for fluorescence excitation in the UV region.

12. Fluorescence-measuring system according to any of Claims 1 to 11, **characterized in that** the linear illumination sources (3, 21, 32, 41) emit light from a continuous or pulsed laser which has been adapted to the entry-side numerical aperture of the optical fibre bundle by using appropriate input coupling optics.

13. Fluorescence-measuring system according to any of Claims 1 to 12, **characterized in that** the detector system (350) contains an imaging detector.

14. Fluorescence-measuring system according to Claim 13, **characterized in that** the imaging detector is a video measuring system preferably equipped with a residual light intensifier.

15. Fluorescence-measuring system according to Claim 14, **characterized in that** the residual light intensifier has a gating device.

16. Fluorescence-measuring system according to any of Claims 1 to 15, **characterized in that** it has one or more filters (36) between the sample-receiving device (1, 31) and the detector system (350), which can select the fluorescence light prior to detection.

17. Fluorescence-measuring system according to Claim 16, **characterized in that** a plurality of filters (36) are arranged in a filter changer (37).

18. Fluorescence-measuring system according to any of Claims 1 to 17, **characterized in that** it has one or more dichroitic mirrors (35) between the microtitre plate (1, 31) and the detector system (350), which make it possible to divide the fluorescence light from the sample-receiving device (1, 31) into two or more wavelengths, followed by selective output coupling of said fluorescence light.

19. Fluorescence-measuring system according to any of Claims 1 to 18, **characterized in that** the microtitre plate (1, 31) is in an essentially horizontal position and the detector system (350) is arranged above or below the microtitre plate (1, 31).

## Revendications

1. Système de mesure de fluorescence
comportant
une plaque de microtitrage (1, 31), et
des sources d'éclairage destinées à l'excitation de la fluorescence d'échantillons dans les orifices de test (2) à travers le fond transparent de la plaque de microtitrage (1, 31), et
un système détecteur (350) destiné à la lumière de fluorescence provenant des orifices de test (2) de la plaque de microtitrage (1, 31), qui est disposé sous la plaque de microtitrage (1, 31) de manière à détecter une émission de fluorescence provenant des orifices de test (2) de la plaque de microtitrage (1, 31) sous un angle se situant en dehors de la plage de réflexion de la lumière d'excitation des sources d'éclairage, **caractérisé en ce que** les sources d'éclairage sont des sources d'éclairage linéaires (3, 21, 32, 41) et sont respectivement disposées sur des côtés opposés de la plaque de microtitrage (1, 31), et **en ce que** le fond transparent (360) de la plaque de microtitrage (1, 31) est éclairé de manière homogène directement ou par l'intermédiaire de miroirs de renvoi sous un angle d'ouverture de ≤ 30°.

2. Système de mesure de fluorescence selon la revendication 1, **caractérisé en ce que** l'émission de fluorescence provenant des orifices de test (2) de la plaque de microtitrage (1, 31) est détectée sous un angle se situant dans la plage de 80° à 100°, et de manière particulièrement préférée d'environ 90°, par rapport au plan d'extension de la plaque de microtitrage (1, 31).

3. Système de mesure de fluorescence selon la revendication 1 ou 2, **caractérisé en ce que** la plaque de microtitrage (1, 31) comporte 96, 384 ou 1536 orifices de test (2).

4. Système de mesure de fluorescence selon l'une des revendications 1 à 3, **caractérisé en ce qu'**il est prévu deux sources d'éclairage linéaires (3, 21, 32, 41) et **en ce qu'**une source d'éclairage linéaire (3, 21, 32, 41) est respectivement disposée sur chacun des deux côtés longitudinaux d'un dispositif de réception d'échantillons (1, 31) rectangulaire.

5. Système de mesure de fluorescence selon l'une des revendications 1 à 4, **caractérisé en ce qu'**il est prévu quatre sources d'éclairage linéaires (3, 21, 32, 41) qui sont respectivement disposées symétriquement par paires sur quatre côtés différents du dispositif de réception d'échantillons (1, 31).

6. Système de mesure de fluorescence selon l'une des revendications 1 à 5, **caractérisé en ce que** les sources d'éclairage linéaires (3, 21, 32, 41) sont réalisées sous la forme de crayons linéaires de combustible d'halogène, de tubes à fluorescence ou de rangées de LED.

7. Système de mesure de fluorescence selon l'une des revendications 1 à 5, **caractérisé en ce que** les sources d'éclairage linéaires (3, 21, 32, 41) sont réalisées sous la forme de guides à fibres optiques disposés de manière linéaire.

8. Système de mesure de fluorescence selon la revendication 7, **caractérisé en ce que** les fibres optiques (22) des guides d'ondes optiques disposés linéairement sont mélangées statistiquement.

9. Système de mesure de fluorescence selon l'une des revendications 1 à 8, **caractérisé en ce que** les sources d'éclairage linéaires (3, 21, 32, 41) émettent une lumière présentant une longueur d'onde correspondant à la longueur d'onde d'excitation pour une excitation par fluorescence d'échantillons dans le dispositif de réception d'échantillons (1, 31).

10. Système de mesure de fluorescence selon l'une des revendications 1 à 9, **caractérisé en ce que** les sources d'éclairage linéaires (3, 21, 32, 41) émettent une lumière colorée ou une lumière blanche filtrée correspondante.

11. Système de mesure de fluorescence selon l'une des revendications 1 à 10, **caractérisé en ce que** les sources d'éclairage linéaires (3, 21, 32, 41) émettent la lumière provenant de lampes à éclairs pour une excitation impulsionnelle ou de lampes UV pour une excitation de fluorescence dans le domaine UV.

12. Système de mesure de fluorescence selon l'une des revendications 1 à 11, **caractérisé en ce que** les sources d'éclairage linéaires (3, 21, 32, 41) émettent la lumière provenant d'un laser continu ou pulsé ayant été adapté à l'ouverture numérique du faisceau lumineux côté entrée au moyen d'une optique d'injection correspondante.

13. Système de mesure de fluorescence selon l'une des revendications 1 à 12, **caractérisé en ce que** le système détecteur (350) comprend un détecteur générateur d'image.

14. Système de mesure de fluorescence selon la revendication 13, **caractérisé en ce que** le détecteur générateur d'image est un système de mesure vidéo, de préférence pourvu d'un dispositif amplificateur de lumière résiduelle.

15. Système de mesure de fluorescence selon la revendication 14, **caractérisé en ce que** le dispositif amplificateur de lumière résiduelle comprend un dispositif à déclenchement.

16. Système de mesure de fluorescence selon l'une des revendications 1 à 15, **caractérisé en ce qu'**il comprend un ou plusieurs filtres (36) entre le dispositif de réception d'échantillons (1, 31) et le système détecteur (3, 50), qui peuvent sélectionner la lumière de fluorescence avant la détection.

17. Système de mesure de fluorescence selon la revendication 16, **caractérisé en ce que** plusieurs filtres (36) sont disposés dans un dispositif de changement de filtre (37).

18. Système de mesure de fluorescence selon l'une des revendications 1 à 17, **caractérisé en ce qu'**il comporte un ou plusieurs miroirs dichroïques (35) entre la plaque de microtitrage (1, 31) et le système détecteur (350), au moyen desquels la lumière de fluorescence provenant du dispositif de réception d'échantillons (1, 31) peut être divisée en deux longueurs d'onde ou plus et être sélectivement couplée en sortie.

19. Système de mesure de fluorescence selon l'une des revendications 1 à 18, **caractérisé en ce que** la plaque de microtitrage (1, 31) présente une position sensiblement horizontale et **en ce que** le système détecteur (350) est disposé au-dessus ou en-dessous de la plaque de microtitrage (1, 31).
